# EUROPÄISCHE PATENTSCHRIFT

(11) **EP 1 354 984 B1**
(45) Veröffentlichungstag und Bekanntmachung des Hinweises auf die Patenterteilung: **09.07.2014**
(21) Anmeldenummer: 03006383.8
(22) Anmeldetag: 20.03.2003
(51) Int. Cl.: C23C 30/00

(54) **Verschleissschutzschicht für spanabhebende Werkzeuge, insbesondere für rotierende Zerspanwerkzeuge**
Wear resistant layer for chip cutting tools, specially rotating chip cutting tools,
Couche résistante à l'usure pour outils à enlèvement de copeaux, spécialement outils à enlèvement de copeaux rotatifs

(30) Priorität: 20.03.2002 DE 10212383
(43) Veröffentlichungstag der Anmeldung: 22.10.2003
(73) Patentinhaber: Gühring, Jörg, Dr., 72458 Albstadt (DE)
(72) Erfinder: Moll, Eberhard, Dr., 10711 Berlin (DE); Weber, Frank-R., Dr, 13407 Berlin (DE)
(74) Vertreter: Winter, Brandl, Fürniss, Hübner, Röss, Kaiser, Polte - Partnerschaft

(56) Entgegenhaltungen:
- US-A- 6 033 734
- US-A- 6 033 768
- PATENT ABSTRACTS OF JAPAN Bd. 0163, Nr. 94 (C-0976), 21. August 1992 (1992-08-21) & JP 4 128363 A (RAIMUZU:KK), 28. April 1992 (1992-04-28)
- I. WADSWORHT ET AL: "Thermal stability and oxidation resistance of TiAlN/CrN multilayer coatings" SURFACE AND COATINGS TECHNOLOGY, Bd. 94-95, 1997, Seiten 315-321, XP002286562
- SMITH ET AL: "Improved Ti1-xAlxN PVD coatings for dry high speed cutting operations" SURFACE ENGINEERING, INSTITUT OF MATERIALS, LONDON, GB, Bd. 14, Nr. 1, 1998, Seiten 37-41, XP002114327

## Beschreibung

Die vorliegende Erfindung bezieht sich auf die Vergütung von Werkzeugen mit Hilfe von harten Verschleißschutzschichten. Als Werkzeuge kommen spanabhebende Werkzeuge, insbesondere rotierende Schaftwerkzeuge, wie Bohrer, Senker, Gewindebohrer, Reibahlen, usw. zur spanabhebenden Bearbeitung von Metallen in Betracht. Bei den Verschleißschutzschichten handelt es sich um etwa 1 bis 10 µm dicke Hartstoffschichten, die bevorzugt mittels PVD (Physical Vapor Deposition) auf der Werkzeugoberfläche abgeschieden werden.

Die Fachwelt ist seit geraumer Zeit bemüht eine Verschleißschutzschicht für die trockene Bearbeitung von Metallen zu finden. Als trockene standfeste Bearbeitung bezeichnet man in diesem Zusammenhang die Zerspanung ohne Kühl- und Schmierflüssigkeit, aber auch die Zerspanung mit Minimalmengenschmierung.

Dabei ging man bei der Entwicklung der Schicht insbesondere bei der Wahl des Schichtmaterials von der Überlegung aus, dass das Werkzeug beim trockenen Spanen wesentlich höhere Temperaturen annimmt und dass diese unerwünschte Temperaturerhöhung reduziert werden kann, wenn ein möglichst hoher Anteil der Wärme nicht über das Werkzeug, sondern über die Späne abtransportiert wird. Es wurde daher in Erwägung gezogen, Materialien zu kombinieren, die entweder für eine hohe Warmhärte und/oder für eine hohe Oxidationsbeständigkeit und/oder für eine niedrige Wärmeleitfähigkeit bekannt waren.

Die am meisten verbreitete Verschleißschutzschicht besteht aus dem goldgelben Titannitrid TiN. TiN-Schichten sind universell einsetzbar. Schichten aus dem dunklen, blaurot schimmernden Titanaluminiumnitrid (Ti,Al)N sind bekannt für ihre hohe Warmhärte. Sie haben meist ein prozentuales Verhältnis der Titan- zu den Aluminiumatomen von 50:50 bzw. (Ti_{0,5}, Al_{0,5})N, gelegentlich auch verschoben in Richtung 40:60 bzw. (Ti_{0,4}, Al_{0,6})N. Bei der Vergütung von Werkzeugen finden sie Anwendung sowohl als Einzelschicht (siehe z.B. Gilles et al., Surface and Coatings Technology 94-95 (1997) 285-290) als auch als (Ti,Al)N/TiN-Mehrlagenschicht mit Zwischenlagen aus Titannitrid (siehe z.B. die sogenannte FIRE-Schicht der Gühring oHG).

CrN-Schichten werden für die Bearbeitung von Nichteisenmetallen empfohlen (siehe z.B. P. Hones, Surface and Coatings Technology 94-95 (1997) 398-402).

Bekannt sind auch MeCrAlY-Legierungen (Me = Metall) zur Beschichtung von Turbinenschaufeln. Sie erhöhen die Oxidationsbeständigkeit und die Wärmedämmung und damit die zulässige Temperatur und den Wirkungsgrad von Flugzeugtriebwerken (siehe z.B. W. Brandl et al., Surface and Coatings Technology 94-95 (1997) 21-26).

Neuerdings wurde auch eine Viellagenschicht (multilayer) aus (Ti,Al)N und CrN bekannt (siehe z.B. I. Wadsworth et al., Surface and Coatings Technology 94-95 (1997) 315-321). Ihre Oxidationsbeständigkeit war um so höher, je höher der Cr-Anteil war, jedenfalls bis zu Cr-Anteilen von 30 at.%. Im selben Labor wurden auch Schichten aus TiAlN mit geringfügigen Zusätzen von Cr und Y untersucht (Patentschrift DE 19818782), Anmeldedatum 27. April 1998).

In der US 6,033,734 werden auf TiAIN basierende Hartbeschichtungen auf Metallen oder Keramiken beschrieben. Vor dem Aufbringen der Hartbeschichtungen wird die Substratoberfläche mittels Ionenätzen gereinigt, wobei bei Verwendung von Cr zum Ionenätzen eine geringe Droplet-Bildung und somit eine gleichmäßiger ausgebildete Hartbeschichtung beobachtet wird. Es wird ferner erwähnt, dass zeitgleich mit der Abscheidung der auf TiAlN basierenden Hartbeschichtung Cr abgeschieden werden kann.

Die JP 04-128363 offenbart eine Ti-Al-Cr-N-Beschichtungsschicht für langlebige Schneidwerkzeuge, wobei die Anteile der Metalle am Gesamtmetallgehalt wie folgt angegeben werden: Al < 80 at %, 20 at % < Cr < 70 at % und als Rest Ti.

Die US 6,033,768 beschreibt Hartbeschichtungen, die auf TiAl basieren und bei denen der Anteil des Al am Gesamtmetallgehalt 10 - 70 at % beträgt. Ferner wird angegeben, dass zur Erhöhung der Abnutzungsbeständigkeit bei hohen Temperaturen ein Anteil von 0,1 - 4 at % an Yttrium in der Beschichtung enthalten ist, wobei das Yttrium entlang der Wachstumsrichtung vorzugsweise ungleichmäßig verteilt vorliegt.

In dem Artikel von Wadsworth et al., "Thermal stability and oxidation resistance of TiAlN/CrN multilayer coatings", in Surface and Coatings Technology, 94-95 (1997), Seiten 315-321, wird die Herstellung von Mehrlagenschichten (Superlattice-Struktur) mit ungefähr gleichen Schichtdicken TiAlN und CrN beschrieben. Der Cr-Anteil in den mittel PVD aufgebrachten Schichten wurde zwischen 10 und 30 at % variiert, um dessen Einfluss auf die Härte und Oxidationsbeständigkeit der Schichten zu bestimmen. Bei der thermischen Belastung der Mehrlagenschichten zeigte sich, dass die Beständigkeit des Strukturaufbaus und die Härte der Schichten sich als unabhängig vom Cr-Anteil erwiesen, die Beständigkeit gegenüber Oxidation jedoch mit dem Cr-Anteil korrelierte.

Der Erfindung liegt daher die Aufgabe zugrunde, eine Verschleißschutzschicht der eingangs beschriebenen Aufgabe zu schaffen, die sich bei einfacher Herstellung durch ein überlegenes Verschleißverhalten, insbesondere bei der sogenannten Trockenbearbeitung und bei Minimalschmierung, auszeichnet.

Die Erfinder haben wurden Werkzeuge aus HSS (high speed steel) und aus Hartmetall mit verschiedensten Schichten und Schichtsystemen aus folgenden Bestandteilen hergestellt und optimiert: Nitride der Metalle Chrom, Aluminium und Titan und ein geringfügiger Zusatz (etwa 1 at %) Yttrium zur Kornverfeinerung. Die Optimierung umfasste folgende Arbeitsgänge: (1) Beschichtung, (2) Analyse der Schichtzusammensetzung, Phasenbestimmung und Texturuntersuchung, (3) Bohrversuche mit verschiedenen Einsatzparametern, (4) Messung des Verschleißverhaltens während der Bohrversuche, (5) Auswertung und Ergebnisse, (6) Beschichtung gleicher Werkzeuge mit einer Schicht mit veränderter prozentualer Zusammensetzung der Metallatome, usw.

Es wurde herausgefunden, dass das beste Verschleißverhalten durch die erfindungsgemäße Steigerung des Cr-Anteils am Gesamtmetallgehalt auf Werte zwischen 30 und 65 at %, vorzugsweise 30 bis 60 %, besonders bevorzugt 40 bis 60 % erzielt wird. Die Anteile von Al und Ti werden dabei entsprechend verringert auf 15 bis 35 at %, vorzugsweise auf 17 bis 25 %, bzw. auf 16 bis 40 at %, vorzugsweise 16 bis 35 at %, besonders bevorzugt 24 bis 35 at %. Wie die vergleichenden Anwendungstests zeigen, konnten die Standzeiten (genauer: Bohrwege) gegenüber dem Stand der Technik entscheidend verlängert werden. Das Ergebnis ist überraschend und war so nicht zu erwarten; denn bekanntermaßen gilt die Mehrlagenschicht (Ti,Al)N/TiN und nicht CrN als das für solche Einsätze geeignetste Schichtmaterial.

Ein weiteres Ziel der Untersuchungen der Erfinder war die Beantwortung der Frage, ob eine Einzelschicht oder eine Mehrlagenschicht die höheren Standzeiten liefert. Die Versuche wurden deshalb doppelt ausgeführt, einerseits mit Einzelschichten aus einer homogenen Mischphase und andererseits mit Mehrlagenschichten aus mehreren Doppelschichten mit der Schichtenfolge (Ti,Al,Y)N/CrN. Das Ergebnis fiel zu Gunsten der Einzelschicht aus, wenn auch nicht sehr deutlich. Es wurde aber gefunden, dass der hohe Cr-Anteil in der Gesamtschicht wichtiger ist als die Schichtstruktur.

Die Frage, ob bei der Mehrlagen-Schicht die erste Lage auf dem HSS- oder Hartmetall-Substrat vorteilhafterweise eine CrN oder eine (Ti,Al,Y)N-Schicht sein sollte, konnte nicht eindeutig geklärt werden. Dagegen lieferten die Versuchsergebnisse auf die Frage, ob die letzte (oberste) Lage vorteilhafterweise eine CrN oder eine (Ti,Al,Y)N sein sollte, ein klares Ergebnis zu Gunsten des CrN.

Eine erste allgemeine Ausführungsform einer erfindungsgemäßen Verschleißschutzschicht auf spanabhebenden Werkzeugen, insbesondere rotierenden Zerspanwerkzeugen, besteht im wesentlichen aus Nitriden mit den Metallkomponenten Cr, Ti, Al und Yttrium, und ist gekennzeichnet durch:
einen Al-Anteil von 15 bis 35 at %,
einen Ti-Anteil von 16 bis 40 at %,
einem Anteil an Yttrium von 0,92 bis 1,2 at % zur Kornverfeinerung und
als Rest einen Cr-Anteil von 30 bis 65 at %,
jeweils bezogen auf alle Metallatome in der gesamten Schicht,
wobei die Verschleißschutzschicht eine Einzellagenschicht einer in sich homogene Mischphase aus (TiAlCrY)N ist.

Eine zweite allgemeine Ausführungsform einer erfindungsgemäßen Verschleißschutzschicht auf spanabhebenden Werkzeugen, insbesondere rotierenden Zerspanwerkzeugen, besteht im wesentlichen aus Nitriden mit den Metallkomponenten Cr, Ti, Al und Yttrium, und ist gekennzeichnet durch:
einen Cr-Anteil von 30 bis 65 at %,
einen Al-Anteil von 15 bis 35 at %,
einen Ti-Anteil von 16 bis 40 at %, und
einen Anteil an Yttrium von 0,2 at % zur Kornverfeinerung, jeweils bezogen auf alle Metallatome in der gesamten Schicht,
wobei die Verschleißschutzschicht eine Mehrlagenschicht aus in sich homogenen (TiAIY)N- und CrN-Schichten ist, die abwechselnd angeordnet sind.

Im folgenden werden bevorzugte Ausführungsformen der erfindungsgemäßen Verschleißschutzschicht an Hand von 3 Beispielen und an Hand von vergleichenden Anwendungstests beschrieben. Die Beschreibung umfasst die Herstelstellungsverfahren und die Charakterisierung durch XPS-Analyse und Röntgenbeugung, und sie nimmt Bezug auf 9 Figuren:
Fig. 1: Rasterelektronenmikroskop - Aufnahme einer erfindungsgemäßen homogenen (Ti,Al,Cr,Y)N-Einzelschicht mit 59 at % Cr im Metallanteil auf einem Hartmetallsubstrat
Fig. 2: Röntgenbeugungsdiagramm der in Fig. 1 gezeigten (Ti,Al,Cr,Y)N-Schicht
Fig. 3: Rasterelektronenmikroskop - Aufnahme einer 1,7 µm dünnen erfindungsgemäßen homogenen (Ti,Al,Cr,Y)N-Schicht mit 40 at. % Cr im Metallanteil auf einem Hartmetallsubstrat
Fig. 4: Röntgenbeugungsdiagramm der in Fig. 3 gezeigten (Ti,Al,Cr,Y)N-Schicht
Fig. 5: Rasterelektronenmikroskop - Aufnahme einer 2,1 µm dünnen erfindungsgemäßen (Ti,Al,Y)N/CrN-Mehrlagenschicht auf einem Hartmetallsubstrat
Fig. 6: Röntgenbeugungsdiagramm der in Fig. 5 gezeigten Mehrlagenschicht
Fig. 7: Standwege beim Bohren in GGG 40 mit einem TiN beschichteten Bohrer, einem mit der Fire-Schicht (Ti,Al)N/TiN beschichteten Bohrer und einem Bohrer mit der in Fig. 1 gezeigten (Ti,Al,Cr,Y)N-Einzelschicht
Fig. 8: Standwege beim Bohren in ST 52 mit einem TiN beschichteten Bohrer, einem (Ti,Al)N-beschichteten Bohrer, einem mit der Fire-Schicht (Ti,Al)N/TiN beschichteten Bohrer, einem Bohrer mit der in Fig. 5 gezeigten (Ti,Al,Y)N(CrN-Mehrlagenschicht und einem Bohrer mit der in Fig. 3 gezeigten (Ti,Al,Cr,Y)N-Einlagenschicht
Fig. 9: Standwege beim Bohren in AISIM2 mit einem TiN beschichteten Bohrer, einem mit der FIRE-Schicht (Ti,Al)N/TiN beschichteten Bohrer und einem Bohrer mit der in Fig. 1 gezeigten (Ti,Al,Cr,Y)N-Einlagenschicht.

### Beispiel 1:

Mit Hilfe eines Arc-Beschichtungsverfahren wurden (Ti, Al, Cr, Y)N-Einzelschichten auf HSS und Hartmetall Schaftwerkzeugen abgeschieden. Als Dampfquellen wurden eine Cr-Kathode und eine (Ti,Al,Y)-Kathode eingesetzt. Prozeßparameter: Substrattemperatur T_{S} = 450° C, Bias-Spannung U_{B}= -50 V, Gesamtionenstrom Jᵢₒₙ= 14 A auf die zu beschichtenden Probesubstrate, Kathodenstrom für die Cr- bzw. TiAlY-Kathoden Iₖ = 300 A, reines Stickstoffplasma (Stickstoffpartialdruck p_{N2} = 5 Pa).

Dem Beschichtungsprozess war eine Substratreinigung durch ein plasmaunterstütztes Ätzen (Beschuss mit Ar-lonen aus einer Niedervoltbogenentladung) vorgeschaltet. Es wurden HSS-Werkzeuge, Vollhartmetallwerkzeuge und flache Probesubstrate beschichtet.

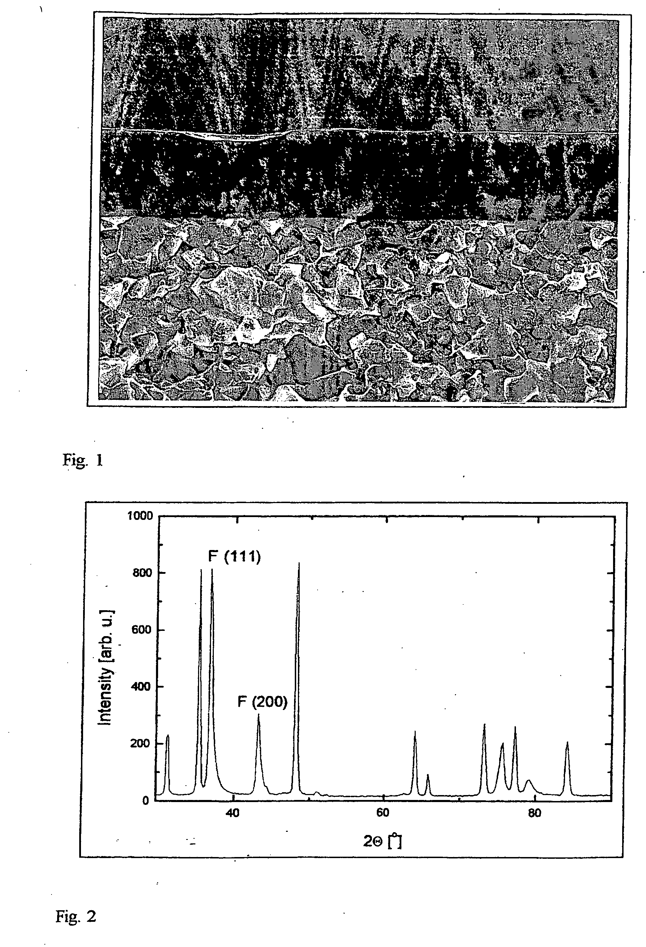

Die Fig. 1 wurde mit einem Rasterelektronenmikroskop (REM) aufgenommen. Sie zeigt mit 10000-facher Vergrößerung eine unter den angegeben Bedingungen abgeschiedene (Ti,Al,Cr,Y)N-Schicht auf einem Hartmetallsubstrat. Diese Schicht wurde mittels Röntgen-Photoelektronenspektroskopie (XPS) und Röntgenbeugung untersucht.

### XPS-Analyse:

Es wurde ein Sepktrometer Cameca Nanoscan 50 verwendet. Die Röntgenstrahlungsquelle bestand aus unmonochromatisiertem Al K_{α} 12 kV und 25 mA (300 W Leistung). Der Analysator hatte eine Auflösung von 1,5 eV und eine Schrittweite von 0,1 eV. Es wurden Ti2p, Al3p, Cr, Y3d und N1s Spektren detektiert. Die Probenoberfläche wurde vor der Analyse mit einem lonenstrahl so lange abgetragen, bis der Sauerstoff an der Oberfläche weitestgehend entfernt war (geringstes level des O1s peaks). Die Bestimmung der atomaren Konzentrationen in den Schichten wurde anhand von Empfindlichkeitsfaktoren bestimmt, die von Cr, Ti, TiN, TiAlN und Y₂O₃ Standards ermittelt wurden. Der geringe Anteil von Kohlenstoff in den Schichten wurde vernachlässigt und bei der Konzentrationsbestimmung nicht berücksichtigt. Es ergab sich folgende Zusammensetzung in den Schichten:

| Element | Cr [at%] | Ti [at%] | Al [at%] | Y [at%] | N [at%] |
|---|---|---|---|---|---|
| Konzentration | 32 | 13 | 9 | 0,5 | 45,5 |

Dies entspricht folgender Zusammensetzung des Gesamtmetallgehalts: Cr 59%, Ti 24%,Al 17%.

### Röntgenbeugung:

Die Phasenbestimmung der Schichten wurde mittels Röntgenbeugung unter Θ - 2 Θ Geometrie mit Cu K_{α}-Strahlung durchgeführt (20 kV). In Fig. 2 ist ein Beugungsdiagramm der (Ti,Al,Cr,Y)N-Schicht dargestellt. Es handelt sich hier um eine nitridische Mischphase der Elemente Ti, Al und Cr mit einer <111> Textur, da die Beugungsreflexe der 111-Netzbenen wesentlich stärkere Intensitäten zeigen, als die 200 und die 220 Netzebenen. Die Beugungsreflexe der <111>, <200> und <220> Netzebenen liegen zwischen denen der (Ti,Al)N- und CrN-Standards.

### Beispiel 2:

Mit Hilfe des gleichen Arc-Beschichtungsverfahrens wie beim Beispiel 1 wurden (Ti, Al, Cr, Y)N-Einzelschichten auf HSS- und Hartmetall-Schaftwerkzeugen abgeschieden. Der einzige Unterschied zum Beispiel 1 liegt in der Einstellung der Verdampferleistung. Der Entladungsstrom der Cr-Kathode betrug I_{K/Cr} = 200 A, der Strom der (Ti,Al,Y)-Kathode I_{K/TiAlY} = 300A.

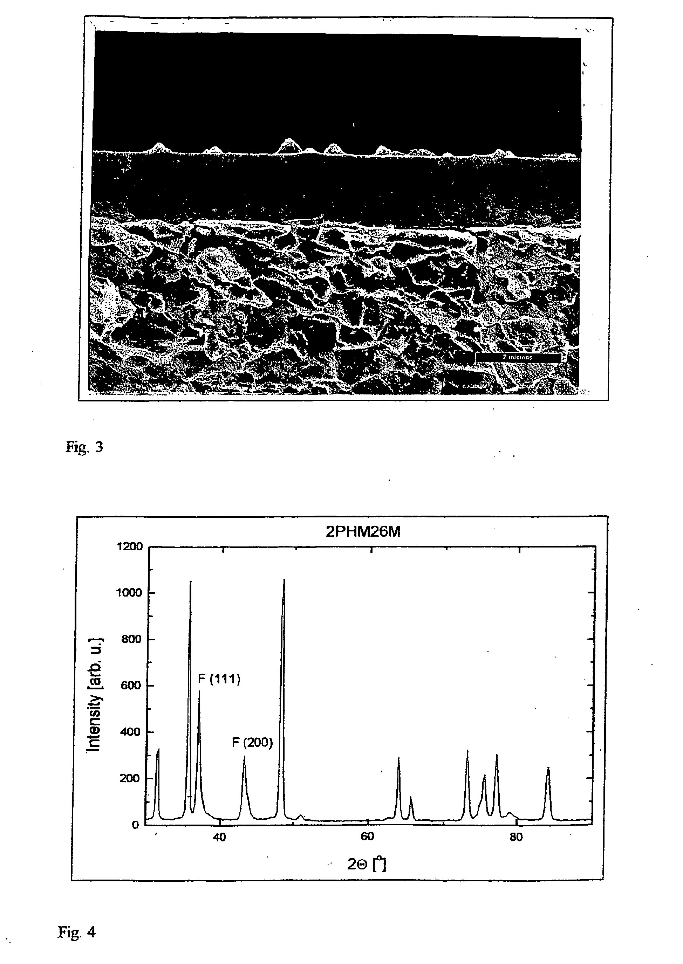

Die Fig. 3 zeigt eine REM- Aufnahme mit 10000 facher Vergrößerung von der unter den angegebenen Bedingungen abgeschiedenen (Ti,Al,Cr,Y)N-Schicht auf einem Hartmetallsubstrat. Die Schichtdicke beträgt 1,7 µm.

XPS-Analyse: Auch in diesem Falle wurde die Schichtzusammensetzung mittels Röntgen-Photoelektronenspektroskopie (XPS) bestimmt. Die deponierten Schichten hatten folgende Zusammensetzung: 23 at % Cr, 20 at % Ti, 14 at% Al, 0,7 at% Y und 42,3 at% N. Der Gesamtmetallgehalt der Schicht besteht also aus 40 at % Cr, 35 at % Ti und 25 at % Al.

Röntgenbeugung: Die Ergebnisse der Röntgenbeugungsuntersuchung sind in Fig. 4 dargestellt. Die Schicht zeigt die gleichen Beugungsreflexe wie die Schicht in Beispiel 1. Lediglich die Intensitäten sind unterschiedlich. Auch hier liegt eine <111>-Textur vor, die allerdings etwas schwächer als die Textur in Beispiel 1 ist. Wie im Beispiel 1 handelt es sich um eine nitridische Mischphase der Elemente Ti, Al und Cr.

### Beispiel 3:

Zur Herstellung der Schichten wurde wieder ein Arc-Verfahren verwendet. Dabei wurden eine Cr-Kathode und eine (Ti,Al,Y)-Kathode zur Schichtdeposition im alternierenden Betrieb für die Abscheidung der einzelnen Lagen eines (Ti,Al,Cr,Y)N/CrN-Mehrlagenschichtsystems eingesetzt. Die Schichten haben eine Gesamtdicke von 2,1 µm. Die Prozessparameter waren:
Substrattemperatur T_{S} = 450° C, Bias-Spannung U_{B}= -50 V, , Entladungsstromstrom für die Cr- bzw. (Ti,Al,Y)-Kathoden im alternierenden Betrieb Iₖ = 300 A, Gesamtionenstrom auf die zu beschichtenden Werkzeuge bei CrN-Deposition Jᵢₒₙ= 9A und bei (Ti,Al,Y)N-Deposition Jᵢₒₙ= 7A, reines Stickstoffplasma (Stickstoffpartialdruck p_{N2} = 5 Pa).

Dem Beschichtungsprozess war, wie in den vorhergehenden Beispielen, eine Substratreinigung durch ein plasmaunterstütztes Ätzen vorgeschaltet. Es wurden HSS-Werkzeuge, Vollhartmetallwerkzeuge und flache Probesubstrate beschichtet.

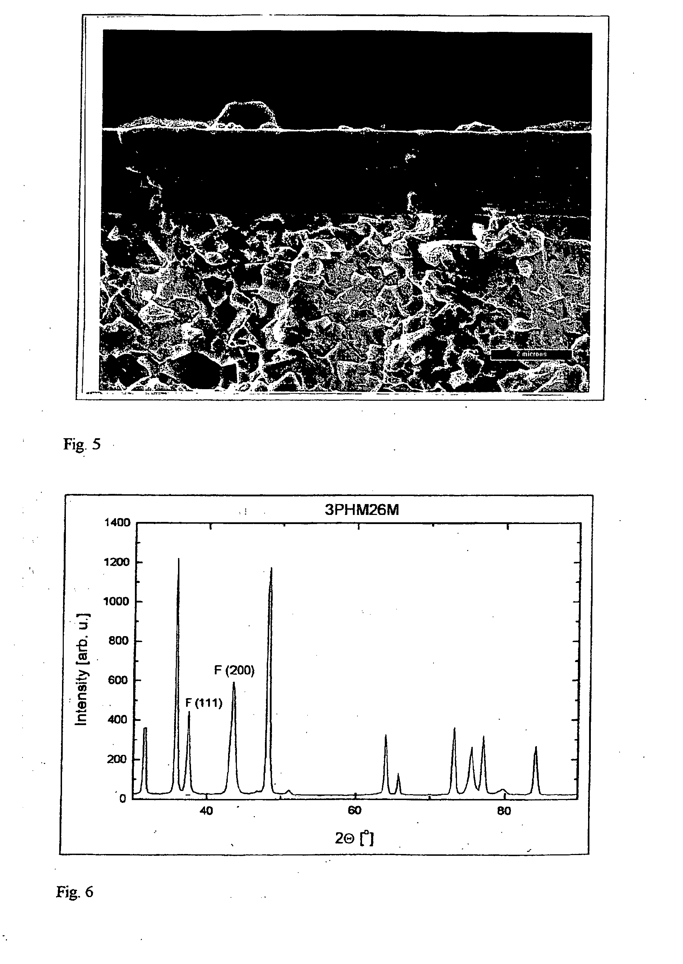

Die Fig. 5 zeigt eine REM - Aufnahme mit 10000 facher Vergrößerung von der unter den hier angegebenen Bedingungen abgeschiedenen (Ti,Al,Y)N/CrN Mehrlagenschicht auf einem Hartmetallsubstrat. Die Mehrlagenschicht besteht aus abwechselnden Lagen aus CrN und stöchiometrischem (Ti_{0,5}Al_{0,5}Y_{0,005})N. Das gesamte Schichtsystem hat etwa 60 at % Cr im Metallanteil.

Die Ergebnisse der Röntgenbeugungsuntersuchung der Mehrlagenschicht sind in Fig. 6 dargestellt. Die Kristallite in den Einzellagen sind statistisch orientiert. Bei Vergrößerung der (111)- und (200)-Beugungsreflexe konnte eindeutig eine Doppelpeakstruktur für die CrN und (Ti,Al)N-Phase festgestellt werden.

### Vergleichender Test der in den Beispielen beschriebenen Schichten

Die Hartmetallbohrer mit den in den Beispielen 1 bis 3 beschriebenen erfindungsgemäßen Schichten wurden in einem Feldversuch hinsichtlich ihres Standwegs in unterschiedlichen Materialien getestet und mit anderen beschichteten Werkzeugen verglichen. Der Standweg von Hartmetallbohrern ist definiert als Weg bis zum Anwachsen der Verschleißmarke an der Hauptschneide auf eine bestimmte Breite. Sie liegt normalerweise bei 400 µm, kann aber bei vergleichenden Tests auch kleiner gewählt werden, wenn die Standwege sonst unvernünftig groß würden. Die Verschleißmarken sind gut zu sehen, da der graue Farbton der erfindungsgemäßen Schicht sich deutlich vom Farbton des Hartmetalls oder HSS unterscheidet. Um den Aufwand zu begrenzen wurden die Tests auf die weniger temperaturempfindlichen Hartmetallwerkzeuge konzentriert. Außerdem wurden sie weitgehend auf das Bohren beschränkt, das bezüglich Kühlung und Schmierung als besonders anspruchsvoll gilt.

Bei den vergleichenden Tests wurden immer Werkzeuge aus einem der Beispiele 1 bis 3 mit mehreren Werkzeugen mit anderen Schichten aber gleichem Substratmaterial und gleicher geometrischer Form bei gleicher Vorbehandlung geprüft. Um bei der Prüfung auch eventuelle Inhomogenitäten des Werkstücks herauszumitteln, wurde beim Bohren genügend Abstand gehalten, damit die Vergleichsbohrungen unmittelbar daneben gesetzt werden konnten. Es wurden grundsätzlich keine durchgängigen, sondern immer nur Sacklochbohrungen mit einer Tiefe von 5 Bohrerdurchmessern ausgeführt.

### Bohren in GGG40

Beschichtete Vollhartmetallbohrer mit einem Durchmesser von 8,5 mm wurden in Gussstahl GGG 40 getestet. Die in Beispiel 1 beschriebene erfindungsgemäße Verschleißschutzschicht wurde mit einer bewährten TiN-Schicht und einer den Stand der Technik repräsentierenden (Ti,Al)N/TiN-Mehrlagenschicht verglichen. Dabei wurden folgende Schnittparameter verwendet: Schnittgeschwindigkeit v_{c} = 110 m/min, Vorschub f=0,26mm/U, Lochtiefe aₚ=42,5mm (5x Bohrerdurchmesser), Minimalmengenschmierung.

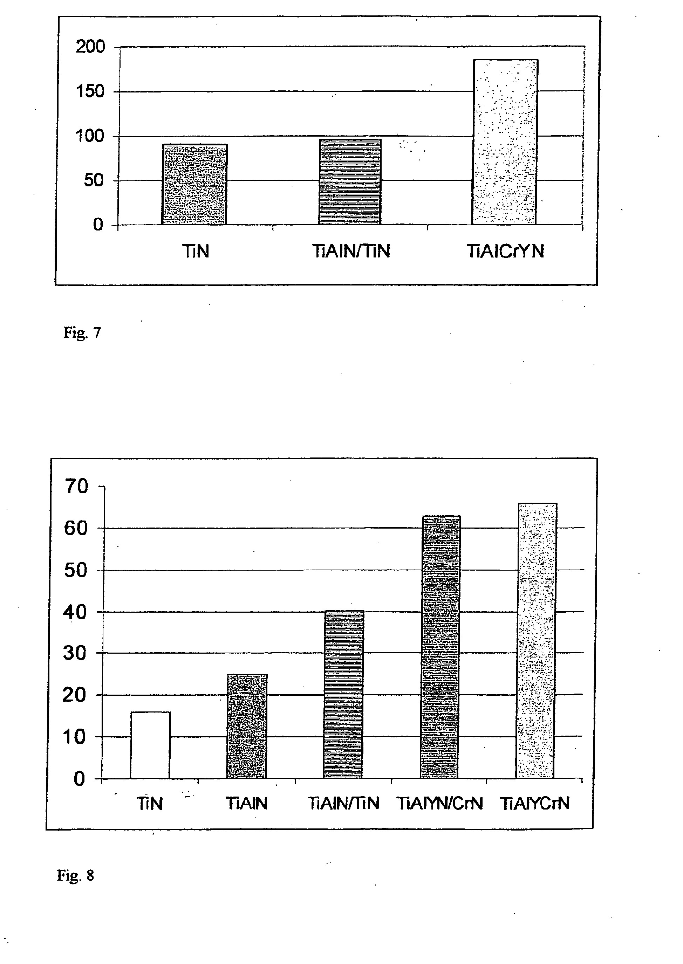

Bei einer Verschleißmarkenbreite von 80 µm ergibt sich der in Fig. 7 dargestellte Standweg. Die Werkzeuge mit der erfindungsgemäßen homogenen (Ti,Al,Cr,Y)N-Einzelschicht mit 59 at % Cr im Metallanteil zeigen den größten Standweg. Er beträgt im Mittel 185 m.

### Bohren in ST52

Beschichtete Vollhartmetall-Ratiobohrer mit einem Durchmesser von 8,5 mm wurden in Baustahl ST52 gebohrt. Die in den Beispielen 2 und 3 beschriebenen erfindungsgemäßen Verschleißschutzschichten mit 40 at % Cr im Metallanteil wurden mit einer mit einer bewährten TiN-Schicht, einer bewährten (Ti,Al)N-Schicht und einer den Stand der Technik repräsentierenden (Ti,Al)N/TiN-Mehrlagenschicht verglichen. Dabei wurden folgende Schnittparameter verwendet: Schnittgeschwindigkeit v_{c} = 107 m/min, Vorschub f = 0,12 mm/U, Lochtiefe aₚ = 42,5 mm,Minimalmengenschmierung.

Bei einer Verschleißmarkenbreite von 400 µm ergibt sich der in Fig. 8 dargestellte Standweg. Die erfindungsgemäß beschichteten Werkzeuge zeigen mit 63 m für die (Ti,Al,Y)N/CrN-Mehrlagenschicht und 65 m für die (Ti,Al,Cr,Y)N-Einzelschicht die größten Standwege.

### Bohren in AISIM2

Beschichtete Vollhartmetallbohrer mit einem Durchmesser von 8,5 mm wurden in Hochleistungsstahl AISIM2 gebohrt. Die in Beispiel 1 beschriebene erfindungsgemäße Verschleißschutzschicht, wurde mit einer bewährten TiN-Schicht und einer den Stand der Technik repräsentierenden (Ti,Al)N/TiN-Mehrlagenschicht verglichen. Dabei wurden folgende Schnittparameter verwendet: Schnittgeschwindigkeit v_{c} = 60 m/min, Vorschub f = 0,25 mm/U, Lochtiefe aₚ = 42,5 mm, Minimalmengenschmierung.

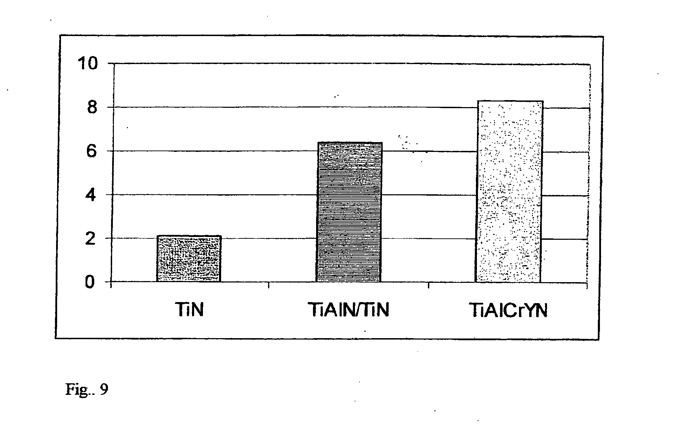

Bei einer Verschleißmarkenbreite von 400 µm ergibt sich der in Fig. 9 dargestellte Standweg. Die Werkzeuge mit der erfindungsgemäßen (Ti,Al,Cr,Y)N-Einzelschicht mit 59 at % Cr im Metallanteil zeigen den größten Standweg. Er beträgt im Mittel 8,2 m.

In den vorangegangenen Beispielen wurde gezeigt, daß mit der erfindungsgemäßen Verschleißschutzschicht ein hervorragendes Verschleißverhalten erreicht wird. Charakteristisch für die Verschleißschutzschicht ist, daß die Einzelschicht im Falle einer Einzellagenschicht oder die einzelnen Schichten im Falle einer Mehrlagenschicht in sich homogen sind, d.h. die (TiAlY)N- bzw. (TiAICrY)N-Schichten homogene kubische Mischphasen darstellen. Das homogen darin verteilte Y dient dabei der Kornverfeinerung. Darüber hinaus ist bei der Herstellung der erfindungsgemäßen Verschleißschutzschicht weder die Verwendung einer Haftvermittlungsschicht, noch eine nachgeschaltete spezielle Wärmebehandlung notwendig, so daß die erfindungsgemäße Verschleißschutzschicht einfach hergestellt werden kann.

Die Beschichtung wird vorzugsweise in einem reinen PVD-Verfahren (arc-Beschichtungssystem bei Substrattemperaturen von maximal 450°C abgeschieden.

Die Gesamtdicke der Verschleißschutzschicht liegt vorzugsweise im Bereich zwischen 1.5 und 5 µ.

Bei einer Mehrlagenschicht werden vorzugsweise 10 bis 15 Einzellagen aufgebracht.

Bevorzugterweise besitzen die Einzellagen einer Mehrlagenschicht eine Dicke von 100 bis 500 nm, besonders bevorzugt 100 bis 200nm.

Bevorzugterweise sind die Einzellagen einer Mehrlagenschicht jeweils gleich dick ausgeführt. Besonders vorteilhaft hat in diesem Fall die äußerste Schicht (CrN-Schicht) eine größere Dicke, die bis zu 100% größer ist als die Dicke der Einzellagen.

## Patentansprüche

1. Verschleißschutzschicht auf spanabhebenden Werkzeugen, insbesondere rotierenden Zerspanwerkzeugen, im wesentlichen bestehend aus Nitriden mit den Metallkomponenten Cr, Ti, Al und Yttrium, **gekennzeichnet durch**
einen Al-Anteil von 15 bis 35 at %,
einen Ti-Anteil von 16 bis 40 at %,
einem Anteil an Yttrium von 0,92 bis 1,2 at % zur Kornverfeinerung und
als Rest einen Cr-Anteil von 30 bis 65 at %,
jeweils bezogen auf alle Metallatome in der gesamten Schicht,
wobei die Verschleißschutzschicht eine Einzellagenschicht einer in sich homogene Mischphase aus (TiAlCrY)N ist.

2. Verschleißschutzschicht auf spanabhebenden Werkzeugen, insbesondere rotierenden Zerspanwerkzeugen, im wesentlichen bestehend aus Nitriden mit den Metallkomponenten Cr, Ti, Al und Yttrium, **gekennzeichnet durch**
einen Cr-Anteil von 30 bis 65 at %,
einen Al-Anteil von 15 bis 35 at %,
einen Ti-Anteil von 16 bis 40 at % und
einen Anteil an Yttrium von 0,2 at % zur Kornverfeinerung,
jeweils bezogen auf alle Metallatome in der gesamten Schicht,
wobei die Verschleißschutzschicht eine Mehrlagenschicht aus in sich homogenen (TiAIY)N- und CrN-Schichten ist, die abwechselnd angeordnet sind.

3. Verschleißschutzschicht nach Anspruch 2, **gekennzeichnet durch** die Zusammensetzung der gesamten Schicht aus mehreren in sich homogenen Lagen, die abwechselnd einerseits aus (TiₓAl_{y}Y_{z})N mit x = 0,38 bis 0,5 und y = 0,48 bis 0,6 und z bis 0,04 und andererseits aus CrN bestehen.

4. Verschleißschutzschicht nach Anspruch 3, **dadurch gekennzeichnet, dass** die oberste Lage der Verschleißschutzschicht von der CrN-Schicht gebildet ist.

5. Verschleißschutzschicht nach einem der vorherigen Ansprüche, **dadurch gekennzeichnet, dass** der Cr-Anteil 30 bis 60 at % beträgt.

6. Verschleißschutzschicht nach einem der vorherigen Ansprüche, **dadurch gekennzeichnet, dass** der Cr-Anteil 40 bis 60 at % beträgt.

7. Verschleißschutzschicht nach einem der vorherigen Ansprüche, **dadurch gekennzeichnet, dass** der Al-Anteil 17 bis 25 at % beträgt.

8. Verschleißschutzschicht nach einem der vorherigen Ansprüche, **dadurch gekennzeichnet, dass** der Ti-Anteil 16 bis 35 at % beträgt.

9. Verschleißschutzschicht nach einem der vorherigen Ansprüche, **dadurch gekennzeichnet, dass** der Ti-Anteil 24 bis 35 at % beträgt.

## Claims

1. Wear-resistant coating on metal-removing tools, particularly rotary metal-cutting tools, consisting essentially of nitrides with the metal components Cr, Ti, Al, and Yttrium, **characterized by**
an Al share of 15 to 35 at%,
a Ti share of 16 to 40 at%,
a share of Yttrium of 0.92 to 1.2 at% for grain refining, and
as the remainder, a Cr share of 30 to 65 at%,
in each case referred to all metal atoms in the entire coating,
wherein the wear-resistant coating is a single-layer coating of a mixed phase made of (TiAlCrY)N being homogeneous in and of itself.

2. Wear-resistant coating on metal-removing tools, particularly rotary metal-cutting tools, consisting essentially of nitrides with the metal components Cr, Ti, Al, and Yttrium, **characterized by**
a Cr share of 30 to 65 at%,
an Al share of 15 to 35 at%,
a Ti share of 16 to 40 at%, and
a share of Yttrium of 0.2 at% for grain refining,
in each case referred to all metal atoms in the entire coating,
wherein the wear-resistant coating is a multilayer coating made of (TiAlY)N and CrN layers being homogeneous in and of themselves, which are alternatingly arranged.

3. Wear-resistant coating according to claim 2, **characterized by** the composition of the entire coating out of multiple layers that are homogeneous in and of themselves, consisting in alternation on the one hand of (TiₓAl_{y}Y_{z})N with x=0.38 to 0.5 and y=0.48 to 0.6 and z= to 0.04 and on the other hand of CrN.

4. Wear-resistant coating according to claim 3, **characterized in that** the topmost layer of the wear-resistant coating is formed by the CrN layer.

5. Wear-resistant coating according to one of the preceding claims, **characterized in that** the Cr share is 30 to 60 at%.

6. Wear-resistant coating according to one of the preceding claims, **characterized in that** the Cr share is 40 to 60 at%.

7. Wear-resistant coating according to one of the preceding claims, **characterized in that** the Al share is 17 to 25 at%.

8. Wear-resistant coating according to one of the preceding claims, **characterized in that** the Ti share is 16 to 35 at%.

9. Wear-resistant coating according to one of the preceding claims, **characterized in that** the Ti share is 24 to 35 at%.

## Revendications

1. Couche de protection à l'usure sur des outils d'usinage, en particulier des outils rotatifs pour l'enlèvement de copeaux, essentiellement constituée de nitrures avec les constituants métalliques Cr, Ti, Al et d'yttrium **caractérisée par**
une part d'Al de 15 à 35 % at,
une part de Ti de 16 à 40 % at,
une part d'yttrium de 0,92 à 1,2 % at pour le recuit de régénération et
comme reste une part de Cr de 30 à 65 % at,
à chaque fois rapporté à tous les atomes métalliques dans la couche globale,
la couche de protection à l'usure étant une monocouche constituée d'une phase mixte homogène en elle-même de (TiAlCrY)N.

2. Couche de protection à l'usure sur des outils d'usinage, en particulier des outils rotatifs pour l'enlèvement de copeaux, essentiellement constituée de nitrures avec les constituants métalliques Cr, Ti, Al et d'yttrium, **caractérisée par**
une part de Cr de 30 à 65 % at,
une part d'Al de 15 à 35 % at,
une part de Ti de 16 à 40 % at et
une part d'yttrium de 0,2 % at pour le recuit de régénération,
à chaque fois rapporté à tous les atomes métalliques dans la couche totale,
la couche de protection à l'usure étant une multicouche constituée de couches de (TiAlY)N et CrN homogènes en elles-mêmes, lesquelles sont disposées de manière alternée.

3. Couche de protection à l'usure selon la revendication 2, **caractérisée par** la composition de la couche totale de plusieurs couches homogènes en elles-mêmes, lesquelles sont constituées de manière alternée d'une part de (TiₓAl_{y}Y_{z})N avec x = 0,38 à 0,5 et y = 0,48 à 0,6 et z jusqu'à 0,04 et d'autre part de CrN.

4. Couche de protection à l'usure selon la revendication 3, **caractérisée en ce que** la couche supérieure de la couche de protection à l'usure est constituée de la couche de CrN.

5. Couche de protection à l'usure selon l'une quelconque des revendications précédentes, **caractérisée en ce que** la part de Cr est de 30 à 60 % at.

6. Couche de protection à l'usure selon l'une quelconque des revendications précédentes, **caractérisée en ce que** la part de Cr est de 40 à 60 % at.

7. Couche de protection à l'usure selon l'une quelconque des revendications précédentes, **caractérisée en ce que** la part d'Al est de 17 à 25 % at.

8. Couche de protection à l'usure selon l'une quelconque des revendications précédentes, **caractérisée en ce que** la part de Ti est de 16 à 35% at.

9. Couche de protection à l'usure selon l'une quelconque des revendications précédentes, **caractérisée en ce que** la part de Ti est de 24 à 35 % at.
